# FASCICULE DE BREVET EUROPEEN

(11) **EP 0 865 629 B1**
(45) Date de publication et mention de la délivrance du brevet: **16.06.1999**
(21) Numéro de dépôt: 96941098.4
(22) Date de dépôt: 03.12.1996
(51) Int. Cl.: G02C 13/00

(54) **APPAREIL POUR LE CENTRAGE D'UN VERRE DE LUNETTES ET LA POSE D'UN BLOC DE PREHENSION SUR CELUI-CI**
ZENTRIERGERÄT FÜR EINE BRILLENLINSE UND DAS AUF DIESE LINSE AUFBRINGEN EINES GREIFBLOCKS
APPARATUS FOR CENTRING A SPECTACLES LENS AND POSITIONING A GRIPPING MEMBER THEREON

(30) Priorité: 07.12.1995 FR 9514498
(43) Date de publication de la demande: 23.09.1998
(73) Titulaire: ESSILOR INTERNATIONAL (Compagnie Générale d'Optique), F-94220 Charenton-le-Pont (FR)
(72) Inventeur: JONCOUR, Christian, F-94410 Saint-Maurice (FR); MASSART, Christian, F-93390 Clichy-sous-Bois (FR)
(74) Mandataire: CABINET BONNET-THIRION
(86) Numéro de dépôt international: FR9601916
(87) Numéro de publication internationale: WO9721140

(56) Documents cités:
- DE-A- 3 829 488
- FR-A- 1 493 482
- FR-A- 2 220 803
- FR-A- 2 558 714
- FR-A- 2 607 268
- FR-A- 2 650 679
- FR-A- 2 663 528

## Description

La présente invention concerne d'une manière générale les opérations qu'un praticien doit exécuter préalablement à l'usinage qu'il est nécessaire d'appliquer à un verre de lunettes pour en adapter le contour à celui d'un des cercles ou entourages de la monture de lunettes choisie par un patient.

Il importe, notamment, d'assurer un centrage de ce verre de lunettes par rapport au cercle ou entourage de monture de lunettes à équiper, et de poser sur lui un bloc, dit ici par simple commodité bloc de préhension, propre à sa mise en place ultérieure sur une meuleuse.

Ces opérations sont le plus souvent conduites à l'aide d'un même appareil, communément appelé centreur-bloqueur, comportant une platine, qui est propre à recevoir le verre de lunettes à traiter, et un dispositif de pose, qui, disposé à l'aplomb de cette platine, est propre à la pose du bloc de préhension sur ce verre de lunettes.

Pour que l'implantation de ce bloc de préhension se fasse à l'endroit convenable, il faut que le verre de lunettes soit préalablement "centré".

Autrement dit, il faut qu'il soit convenablement positionné par rapport au cercle ou entourage de monture de lunettes qu'il doit équiper.

Pour ce faire, il est usuellement prévu un écran, qui est propre à la visualisation, d'une part, d'une figuration à l'image du verre de lunettes, et, d'autre part, d'une figuration à l'image du cercle ou entourage de monture de lunettes à équiper.

C'est le cas, par exemple, dans le brevet français publié sous le No 2 188 182.

Dans ce brevet français, l'écran est un simple verre dépoli, qui sert de platine au verre de lunettes, et sur lequel se superpose, par projection, une image du cercle ou entourage de monture de lunettes à équiper.

Il est cependant connu par ailleurs, notamment par le brevet français publié sous le No 2 547 930, de disposer d'un écran électronique sur lequel peuvent être superposées une figuration à l'image du verre de lunettes et une figuration à l'image du cercle ou entourage de monture de lunettes à équiper.

Dans tous les cas, il convient de prendre en compte les caractéristiques du patient.

Il s'agit, plus précisément, de son écart, ou demi-écart, pupillaire, et de la hauteur, communément dite hauteur de montage, de ses pupilles par rapport à la partie inférieure des cercles ou entourages de la monture de lunettes lorsqu'il porte celle-ci.

Cet écart pupillaire et cette hauteur de montage ont longtemps été mesurés à l'aide d'appareils particuliers, un pupillomètre pour l'écart pupillaire et une simple réglette pour la hauteur de montage, et ils le sont encore fréquemment aujourd'hui.

Il faut donc "entrer" les relevés correspondants dans le centreur-bloqueur, au risque d'une éventuelle malencontreuse erreur dans les manipulations nécessaires à cet effet.

Il a donc été déjà proposé de prendre directement en compte, dans un tel centreur-bloqueur, une photographie du patient équipé de la monture de lunettes qu'il a choisie, en relevant, sur cette photographie l'écart pupillaire et la hauteur de montage recherchés.

Mais, pour des raisons pratiques évidentes, cette photographie ne peut pas être exécutée à l'échelle grandeur, et il se pose un problème de mise au bon format, qui peut malencontreusement être lui-même à l'origine d'erreurs.

Il en est d'autant plus ainsi que, pour l'interprétation de cette photographie, on ne dispose en pratique d'aucun référentiel.

Il a enfin été récemment proposé, dans la demande de certificat d'utilité français publiée sous le No 2 690 834, et dans la demande de brevet français publiée sous le No 2 690 832 qui en reprend les éléments, d'informatiser le relevé des caractéristiques d'un patient, en partant d'une image de celui-ci qui est fournie par un quelconque appareil de prise de vue et sur laquelle ce patient apparaît équipé de la monture de lunettes concernée, ce qui permet d'assurer par le calcul le centrage de chacun des verres de lunettes à monter par rapport aux cercles ou entourages de cette dernière.

Mais, ni dans cette demande de certificat d'utilité, ni dans cette demande de brevet, il n'est prévu une quelconque liaison avec un bloqueur, c'est-à-dire avec un dispositif de pose d'un bloc de préhension.

Le document DE-A-3 829 488 montre également un centreur-bloqueur employant un écran de visualisation d'un verre de lunette.

La présente invention a d'une manière générale une disposition permettant, par une telle liaison, de pallier de manière satisfaisante les difficultés précédemment exposées par les caractéristiques de l'appareil définies dans la revendication 1.

De manière plus précise, elle a pour objet un appareil pour le centrage d'un verre de lunettes et la pose d'un bloc de préhension sur celui-ci, ou, autrement dit, un centreur-bloqueur, comportant, en combinaison, une platine, qui est propre à recevoir un verre de lunettes à monter dans l'un des cercles ou entourages d'une monture de lunettes choisie par un patient, un dispositif de pose, qui, disposé à l'aplomb de la platine, est propre à la pose d'un bloc de préhension sur le verre de lunettes, et un écran, qui est propre à la visualisation, d'une part, d'une figuration à l'image du verre de lunettes, telle que, par exemple, le contour de ce verre de lunettes lui-même, un réticule représentatif de ce contour, ou d'autres types de réticule, et, d'autre part, d'une figuration à l'image du cercle ou entourage de monture de lunettes à équiper, et en ce qu'il lui est associé des moyens de figuration dont il résulte que la figuration à l'image du cercle ou entourage de monture de lunettes à équiper est une image importée du patient équipé de la monture de lunettes concernée.

En bref, il est assuré, suivant l'invention, l'importation, dans le centreur-bloqueur, en provenance d'un quelconque appareil de prise de vue, qu'il s'agisse par exemple d'un appareil photographique, d'une caméra ou d'un camescope, et moyennant des moyens de transmission appropriés, d'une image du patient équipé de la monture de lunettes qu'il a choisie, et cette image, qui peut être directement une image analogique ou digitale, ou qui peut être une image "scannée", c'est-à-dire une image résultant d'une analyse systématique, point par point, d'une image préétablie, est importée telle quelle, sans référentiel connu ni traitement particulier.

Suivant un développement de l'invention, le centreur-bloqueur est préférentiellement couplé à un appareil de lecture de contour, qui est propre à appréhender en fond de drageoir la forme du cercle ou entourage de monture de lunettes à équiper, et qui fait ainsi du centreur-bloqueur un lecteur-centreur-bloqueur, et il est prévu des moyens propres à un mixage, sur son écran, d'une figuration de la forme ainsi lue de ce cercle ou entourage de monture de lunettes avec celle de l'image importée du patient équipé de la monture de lunettes.

La forme lue étant parfaitement connue et particulièrement précise, sa figuration peut avantageusement servir de référentiel, et elle permet, donc, après adaptation, de procéder, avant le centrage et le blocage, aux éventuelles corrections nécessaires, pour tenir compte, notamment, de l'inclinaison de la monture de lunettes sur le patient.

Portant sur une forme connue, le traitement correspondant est avantageusement relativement simple, sans exiger des images suffisamment contrastées et des moyens informatiques lourds.

Suivant un autre développement, le centreur-bloqueur suivant l'invention peut également être couplé, si désiré, à une meuleuse numérique, pour l'usinage des verres de lunettes à monter.

En bref, l'invention permet avantageusement, pour le centrage des verres de lunettes et la pose d'un bloc de préhension sur ceux-ci, voire même pour leur usinage, d'éviter la prise de mesures directes sur le patient, d'importer et d'exploiter des images qui, d'origines diverses, ne relèvent pas nécessairement d'une échelle uniforme, de mémoriser si nécessaire un ensemble complet portant sur tous les paramètres à prendre en considération, et de se satisfaire pour tout cela de moyens informatiques relativement simples.

Les caractéristiques et avantages de l'invention ressortiront d'ailleurs de la description qui va suivre, à titre d'exemple, en référence aux dessins schématiques annexés sur lesquels :
la figure 1 est un bloc diagramme d'un appareil suivant l'invention ;
la figure 2 est, à échelle supérieure, une vue de son écran illustrant une phase de sa mise en oeuvre ;
les figures 3A, 3B, 3C, 3D sont d'autres vues de cet écran pour d'autres phases de cette mise en oeuvre ;
les figures 4A, 4B sont des vues analogues à celles des figures 3A, 3B, 3C, 3D, pour un autre mode de mise en oeuvre.

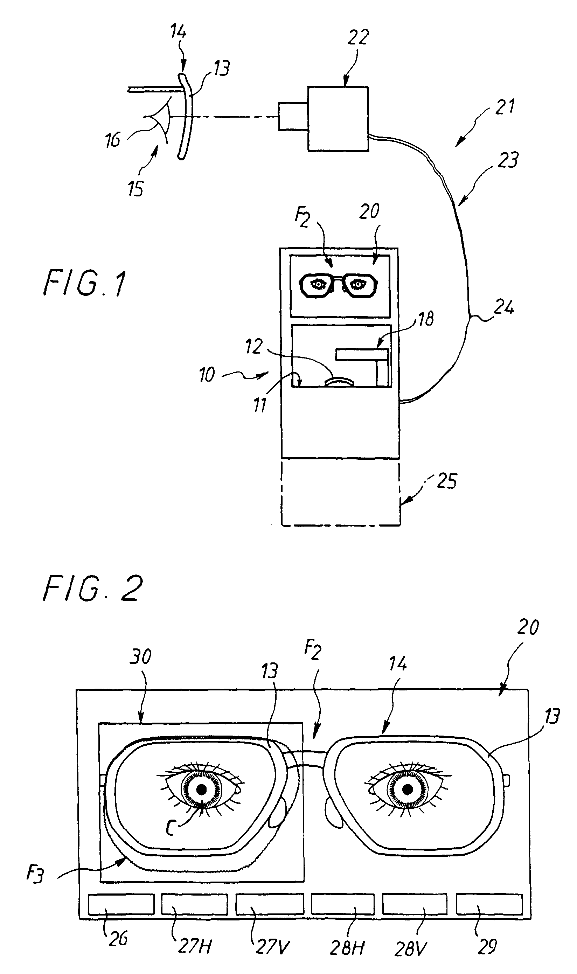

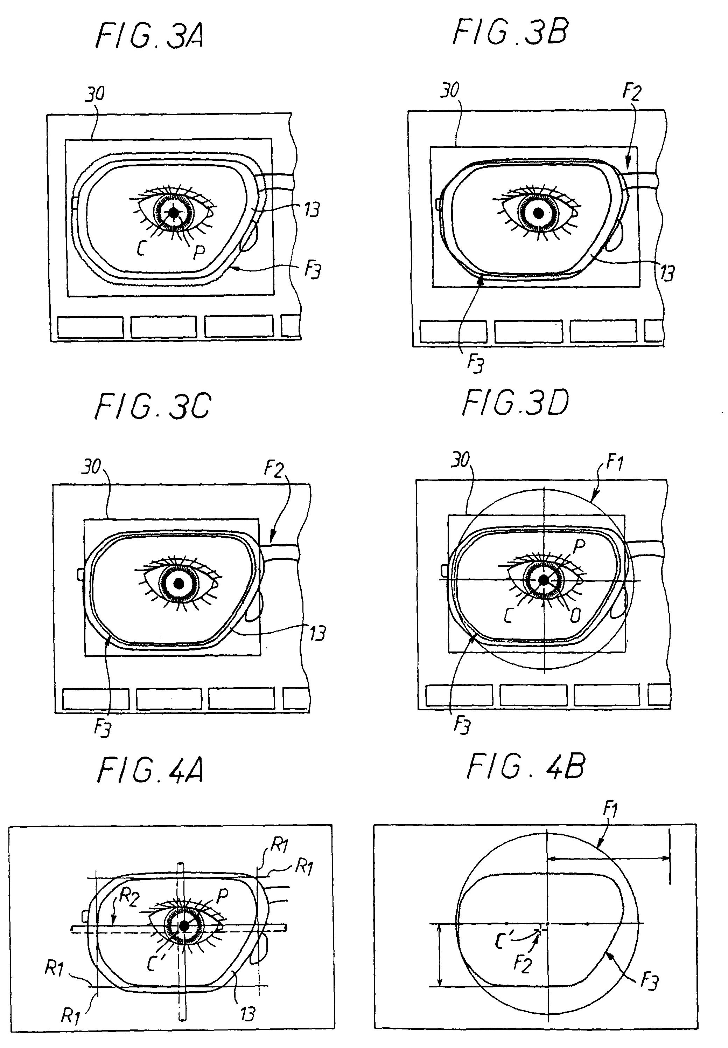

Tel qu'illustré en traits continus sur la figure 1, l'appareil 10 suivant l'invention comporte une platine 11, qui est propre à recevoir un verre de lunettes 12 à monter dans l'un des cercles ou entourages 13 d'une monture de lunettes 14 choisie par un patient 15 schématisé par l'un et/ou l'autre de ses yeux 16, un dispositif de pose 18, qui, disposé à l'aplomb de la platine 11, est propre à la pose d'un bloc de préhension, non représenté, sur le verre de lunettes 12, et un écran 20, qui est propre à la visualisation, d'une part, d'une figuration F1 à l'image du verre de lunettes 12, figure 4B, et, d'autre part, d'une figuration F2 à l'image du cercle ou entourage 13 de la monture de lunettes 14 à équiper.

Les dispositions correspondantes étant bien connues par elles-mêmes, elles ne seront pas décrites plus en détail ici.

Suivant l'invention, il est associé, à l'appareil 10, des moyens de figuration 21 dont il résulte que la figuration F2 à l'image du cercle ou entourage 13 de la monture de lunettes 14 à équiper est une image importée du patient 15 équipé de cette monture de lunettes 14.

Globalement, les moyens de figuration 21 comportent un appareil de prise de vue 22, et des moyens de transmission 23 aptes à intervenir entre cet appareil de prise de vue 22 et l'appareil 10.

Dans la forme de réalisation plus particulièrement représentée sur la figure 1, l'appareil de prise de vue 22 est une caméra, et par exemple une caméra CCD.

Mais il pourrait tout aussi bien s'agir d'un appareil photographique ou d'un camescope.

Corollairement, dans la forme de réalisation plus particulièrement représentée sur la figure 1, les moyens de transmission 23 se résument à un simple câble de liaison 24 reliant directement l'appareil de prise de vue 22 à l'appareil 10.

Préférentiellement, et tel que schématisé en traits interrompus sur la figure 1, l'appareil 10 est couplé à un appareil de lecture de contour 25 propre à appréhender en fond de drageoir la forme du cercle ou entourage 13 de la monture de lunettes 14 à équiper, et il comporte des moyens propres à un mixage, sur son écran 20, d'une figuration F3 de la forme ainsi lue de ce cercle ou entourage 13 avec celle F2 de l'image importée du patient 15 équipé de la monture de lunettes 14.

Les dispositions correspondantes étant bien connues par elles-mêmes, et relevant en pratique de l'homme de l'art, elles ne seront pas décrites ici.

Suivant des dispositions qui ne nécessitent pas non plus d'être décrites dans leur détail ici, l'appareil 10 suivant l'invention comporte des moyens de réglage propres à permettre le centrage, sur son écran 20, de la figuration F3 de la forme lue du cercle ou entourage 13 de la monture de lunettes 14 à équiper, et des moyens de réglage propres à permettre un grandissement de cette figuration F3 suivant l'une et l'autre de deux directions orthogonales.

Il sera suffisant, à ce sujet, d'indiquer que, en association avec l'écran 20, le praticien a, par exemple, à sa disposition, outre un bouton de sélection 26, qui lui permet de passer de l'un à l'autre des yeux 16 du patient 15, deux boutons de centrage 27H, 27V, l'un pour un déplacement horizontal, l'autre pour un déplacement vertical, deux boutons de grandissement 28H, 28V, l'un pour un grandissement horizontal, l'autre pour un grandissement vertical, et un bouton de validation 29.

Enfin, suivant des dispositions qui, relevant de l'homme de l'art, ne seront pas non plus décrites ici, l'appareil 10 suivant l'invention comporte des moyens de calcul propres à déduire d'une comparaison entre la figuration F3 de la forme lue du cercle ou entourage 13 de la monture de lunettes 14 à équiper et la figuration F2 de l'image importée du patient 15 équipé de la monture de lunettes 14 diverses corrections, et, notamment, des corrections permettant de tenir compte de l'inclinaison éventuelle de cette monture de lunettes 14 sur le patient 15, pour un ajustement en conséquence de l'écart pupillaire et de la hauteur de montage par ailleurs relevés.

Cela étant, pour la mise en oeuvre de l'appareil 10 suivant l'invention, il peut par exemple, suivant un premier mode de mise en oeuvre possible, être procédé comme suit.

La figuration F2 portant, suivant l'invention, sur une image du patient 15 équipé de la monture de lunettes 14 choisie par lui étant importée sur l'écran 20, comme représenté à la figure 2, on fait apparaître, conjointement, sur cet écran 20, la figuration F3 de la forme lue d'un des cercles ou entourages 13 de cette monture de lunettes 14, en l'espèce du cercle ou entourage 13 de gauche, comme représenté sur cette figure 2.

En pratique, cette figuration F3 est centrée sur une fenêtre d'exploitation 30.

Soit C le centre géométrique de cette fenêtre d'exploitation 30, à la croisée de ses diagonales.

Ce centre géométrique C correspond à l'axe mécanique du dispositif de pose 18, c'est-à-dire à l'axe, communément dit axe de glantage, suivant lequel se fait, mécaniquement, par ce dispositif de pose 18, la pose d'un bloc de préhension sur le verre de lunettes 12.

Tel que schématisé sur la figure 3A, le praticien assure tout d'abord un centrage de la figuration F3, et donc de la fenêtre d'exploitation 30, par rapport à l'image du patient 15.

Autrement dit, par action sur les boutons de centrage 27H, 27V, il fait en sorte que le centre géométrique C coïncide avec la pupille P du patient 15.

Par action sur les boutons de grandissement 28H, 28V, le praticien fait ensuite en sorte que la figuration F3 de la forme lue trouve approximativement sa place au sein du cercle ou entourage 13 de la figuration F2, comme cela est le cas effectif du drageoir de ce cercle ou entourage 13.

Par exemple, le praticien intervient d'abord sur le bouton de grandissement 28H de grandissement horizontal, figure 3B, puis sur le bouton de grandissement 28V de grandissement vertical, figure 3C.

Mais, bien entendu, un ordre d'intervention inverse est tout à fait envisageable.

Dans tous les cas, la fenêtre d'exploitation 30 se déforme en conséquence.

Par comparaison entre la forme finale de cette fenêtre d'exploitation 30 et sa forme d'origine, les moyens de calcul que comporte l'appareil 10 suivant l'invention permettent de déterminer l'inclinaison, par rapport à la verticale, de la monture de lunettes 14 sur le patient 15.

Ils permettent donc de déterminer les corrections à apporter aux valeurs de l'écart pupillaire et de la hauteur de montage ressortant de la figuration F2.

Autrement dit, ils permettent de déterminer les corrections à apporter à la position de la pupille P par rapport au centre géométrique C.

Dans la détermination de ces corrections, la figuration F3 de la forme lue est ainsi prise comme référentiel d'échelle 1.

Tel que schématisé à la figure 3D, le praticien affiche ensuite, sur l'écran 20, qui assure par lui-même un mixage de l'ensemble, la figuration F1 à l'image du verre de lunettes 12.

Cette figuration F1 peut résulter d'une prise de vue directe de ce verre de lunettes 12.

Il peut s'agir également d'un réticule adapté à l'échelle de l'image importée.

Quoi qu'il en soit, il est tenu compte des corrections précédentes dans l'établissement de cette figuration F1, en sorte que, au lieu d'être en forme de cercle, elle est légèrement déformée en forme d'ellipse.

De manière usuelle, le praticien positionne la figuration F1 de manière à ce que, comme représenté sur la figure 3D, le centre optique O du verre de lunettes 12 coïncide lui aussi avec la pupille P du patient 15, ou avec le reflet cornéen matérialisant en pratique celle-ci.

Pour ce faire, il peut tirer parti du repère matérialisant usuellement un tel centre optique O sur un verre de lunettes 12, ou de tout autre repère porté par ce dernier.

Après s'être assuré, visuellement, que le diamètre du verre de lunettes 12 choisi est suffisant, sa figuration F1 enveloppant alors en tout point la figuration F3 de la forme lue, il suffit, au praticien, d'abord d'axer le verre, c'est-à-dire de le positionner par rapport au dispositif de pose 18 de manière à ce que son centre optique O se trouve sur l'axe de glantage de celui-ci, puis de poser sur ce verre de lunettes 12, à l'aide de ce dispositif de pose 18, le bloc de préhension devant l'équiper.

Bien entendu, et suivant des dispositions connues par elles-mêmes, il est également possible de procéder directement à cette pose suivant l'axe de glantage du dispositif de pose 18, sans axage préalable.

Il suffit, en effet, dans ce cas, de tenir compte, au meulage, de l'excentrement que présente alors le bloc de préhension par rapport au centre optique O du verre de lunettes 12.

Suivant un deuxième mode de mise en oeuvre possible, et tel que schématisé sur la figure 4A, le praticien dispose de quatre réticules R1, qui, orthogonaux deux à deux, lui permettent d'encadrer le contour interne du cercle ou entourage 13 de la monture de lunettes 14 à équiper.

Il en résulte la détermination d'un centre géométrique C', qu'un deuxième réticule R2 permet de matérialiser.

Il suffit, dès lors, au praticien, de superposer, comme précédemment, ce centre géométrique C' à la pupille P, figure 4A.

Le praticien affiche ensuite, également comme précédemment, la figuration F1 à l'image du verre de lunettes 12, et la figuration F3 à l'image de la forme lue, figure 4D.

Dans le mixage de l'ensemble, la figuration F2 peut se trouver réduite à celle du centre géométrique C' précédemment déterminé, comme représenté.

Il est ensuite procédé à la pose d'un bloc de préhension, dans les mêmes conditions que précédemment.

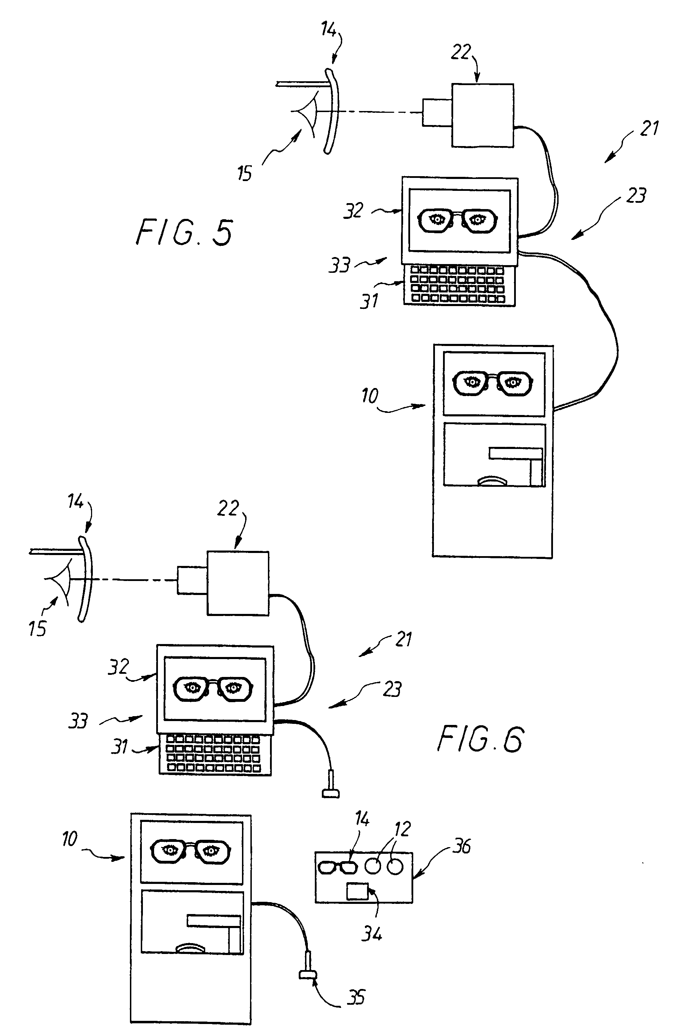

Dans la forme de réalisation représentée sur la figure 5, les moyens de transmission 23 intervenant entre l'appareil de prise de vue 22 et l'appareil 10 comportent une unité de traitement 31 à laquelle est couplé un moniteur de contrôle 32.

Dans la forme de réalisation représentée sur la figure 6, ils comportent, d'une part, des moyens d'édition 33, qui, pilotés par l'appareil de prise de vue 22, sont propres à l'édition d'une carte 34 portant, éventuellement sous forme codée, la prise de vue effectuée, et, d'autre part, un lecteur de carte 35 qui, propre à la lecture de la carte 34, pilote l'appareil 10.

Par exemple, les moyens d'édition 33 comportent, comme précédemment, une unité de traitement 31 à laquelle est couplé un moniteur de contrôle 32.

Par exemple, également, la carte 34 éditée est codée sous forme de code barre.

Dans la forme de réalisation représentée, cette carte 34 est véhiculée, des moyens d'édition 33 à l'appareil 10, dans un bac 36 dans lequel on place également, d'une part, la monture de lunettes 14 choisie par le patient 15, et, d'autre part, les verres de lunettes 12 à monter sur cette monture de lunettes 14.

Bien entendu, la présente invention ne se limite pas aux formes de réalisation et de mise en oeuvre décrites et représentées, mais englobe toute variante de réalisation et/ou de mise en oeuvre telle que définie par les revendications.

## Revendications

1. Appareil pour le centrage d'un verre de lunettes et la pose d'un bloc de préhension sur celui-ci, comportant une platine (11), qui est propre à recevoir un verre de lunettes (12) à monter dans l'un des cercles ou entourages (13) d'une monture de lunettes (14) choisie par un patient (15), un dispositif de pose (18), qui, disposé à l'aplomb de la platine (11), est propre à la pose d'un bloc de préhension sur le verre de lunettes (12), et un écran (20), qui est propre à la visualisation, d'une part, d'une figuration (F1) à l'image du verre de lunettes (12), caractérisé en ce que ledit écran est, d'autre part, propre à la visualisation d'une figuration (F2) à l'image du cercle ou entourage (13) de la monture de lunettes (14) à équiper, et en ce qu'il lui est associé des moyens de figuration (21) dont il résulte que la figuration (F2) à l'image du cercle ou entourage (13) de la monture de lunettes (14) à équiper est une image importée du patient (15) équipé de la monture de lunettes (14) concernée.

2. Appareil suivant la revendication 1, caractérisé en ce que les moyens de figuration (21) comportent un appareil de prise de vue (22) et des moyens de transmission (23) aptes à intervenir entre cet appareil de prise de vue (22) et lui.

3. Appareil suivant la revendication 2, caractérisé en ce que les moyens de transmission (23) se résument à un simple câble de liaison (24).

4. Appareil suivant la revendication 2, caractérisé en ce que les moyens de transmission (23) comportent une unité de traitement (31) à laquelle est couplé un moniteur de contrôle (32).

5. Appareil suivant la revendication 2, caractérisé en ce que les moyens de transmission (21) comportent, d'une part, des moyens d'édition (33), qui, pilotés par l'appareil de prise de vue (22), sont propres à l'édition d'une carte (34) portant, éventuellement sous forme codée, la prise de vue effectuée, et, d'autre part, un lecteur de carte (35).

6. Appareil suivant l'une quelconque des revendications 1 à 5, caractérisé en ce qu'il est couplé à un appareil de lecture de contour (25) propre à appréhender en fond de drageoir la forme du cercle ou entourage (13) de la monture de lunettes (14) à équiper, et il comporte des moyens propres à un mixage, sur son écran (20), d'une figuration (F3) de la forme ainsi lue de ce cercle ou entourage (13) avec celle (F2) de l'image importée du patient (15) équipé de la monture de lunettes (14).

7. Appareil suivant la revendication 6, caractérisé en ce qu'il comporte des moyens de réglage propres à permettre le centrage de la figuration (F3) de la forme lue du cercle ou entourage (13) de la monture de lunettes (14) à équiper.

8. Appareil suivant l'une quelconque des revendications 6, 7, caractérisé en ce qu'il comporte des moyens de réglage propres à permettre un grandissement, suivant l'une et l'autre de deux directions orthogonales, de la figuration (F3) de la forme lue du cercle ou entourage (13) de la monture de lunettes (14) à équiper.

9. Appareil suivant l'une quelconque des revendications 6 à 8, caractérisé en ce qu'il comporte des moyens de calcul propres à déduire d'une comparaison entre la figuration (F3) de la forme lue du cercle ou entourage (13) de la monture de lunettes (14) à équiper et la figuration (F2) de l'image importée du patient (15) équipé de la monture de lunettes (14) des corrections permettant de tenir compte de l'inclinaison éventuelle de cette monture de lunettes (14).

## Claims

1. Apparatus for centering a spectacles lens and fitting a gripping block thereon, comprising a plate (11) which is capable of receiving a spectacles lens (12) to be mounted in one of the rims or mountings (13) of a spectacles frame (14) selected by a patient (15), a fitting device (18) which, disposed in vertical alignment with the plate (11), is suitable for fitting a gripping block on the spectacles lens (12), and a screen (20) which is suitable for the display on the one hand of a representation (F1) in the image of the spectacles lens (12), characterised in that said screen is on the other hand suitable for the display of a representation (F2) in the image of the rim or mounting (13) of the spectacles frame (14) to be fitted, and that associated therewith are representation means (21) which provide that the representation (F2) in the image of the rim or mounting (13) of the spectacles frame (14) to be fitted is an imported image from the patient (15) fitted with the spectacles frame (14) in question.

2. Apparatus according to claim 1 characterised in that the representation means (21) comprise an apparatus (22) for shooting a view and transmission means (23) capable of being operatively disposed between said apparatus (22) for shooting a view and itself.

3. Apparatus according to claim 2 characterised in that the transmission means (23) are limited to a simple connecting cable (24).

4. Apparatus according to claim 2 characterised in that the transmission means (23) comprise a processing unit (31) to which a control monitor (32) is coupled.

5. Apparatus according to claim 2 characterised in that the transmission means (21) comprise on the one hand editing means (33) which, pilot-controlled by the apparatus (22) for shooting a view, are capable of editing a card (34) which carries, possibly in encoded form, the view shot, and, on the other hand, a card reader (35).

6. Apparatus according to any one of claims 1 to 5 characterised in that it is coupled to a contour reading apparatus (25) for detecting at the bottom of a lens-mounting groove the shape of the rim or mounting (13) of the spectacles frame (14) to be fitted, and it comprises means for mixing on its screen (20) a representation (F3) of the shape which is read in that way of said rim or mounting (13) with that (F2) of the imported image from the patient (15) fitted with the spectacles frame (14).

7. Apparatus according to claim 6 characterised in that it comprises regulating means for permitting centering of the representation (F3) of the read shape of the rim or mounting (13) of the spectacles frame (14) to be fitted.

8. Apparatus according to either one of claims 6 and 7 characterised in that it comprises regulating means for permitting an increase in size in both of two orthogonal directions of the representation (F3) of the read shape of the circle or rim (13) of the spectacles frame (14) to be fitted.

9. Apparatus according to any one of claims 6 to 8 characterised in that it comprises calculating means for deducing from a comparison between the representation (F3) of the read shape of the rim or mounting (13) of the spectacles frame (14) to be fitted and the representation (F2) of the imported image from the patient (15) fitted with the spectacles frame (14) corrections making it possible to take account of the possible inclination of said spectacles frame (14).

## Patentansprüche

1. Vorrichtung für das Zentrieren eines Brillenglases und das Aufbringen eines Greifblocks auf dasselbe, umfassend eine Grund- bzw. Trageplatte (11), die geeignet ist, ein Brillenglas (12) aufzunehmen, welches in einen der Kreise bzw. Einfassungen (13) einer von einem Patienten (15) gewählten Brillenfassung (14) zu montieren ist, eine Aufbringvorrichtung (18), welche, senkrecht auf die Grund- bzw. Trageplatte (11) angeordnet, zur Anbringung eines Greifblocks auf das Brillenglas (12) geeignet ist, und einen Bildschirm (20), der einerseits zur Sichtbarmachung bzw. Anzeige einer Darstellung (F1) im Bild des Brillenglases (12) geeignet ist, dadurch gekennzeichnet, daß der Bildschirm andererseits zur Sichtbarmachung bzw. Anzeige einer Darstellung (F2) im Bild des Kreises bzw. der Einfassung (13) der auszustattenden Brillenfassung (14) geeignet ist, und daß er mit Einrichtungen zur Sichtbarmachung (21) ausgestattet ist, woraus resultiert, daß die Darstellung (F2) im Bild des Kreises bzw. der Einfassung (13) der auszustattenden Brillenfassung (14) ein vom Patienten (15), der mit der entsprechenden Brillenfassung (14) ausgestattet ist, importiertes bzw. eingebrachtes Bild ist.

2. Vorrichtung nach Anspruch 1, dadurch gekennzeichnet, daß die Einrichtungen zur Sichtbarmachung (21) eine Aufnahmeeinrichtung (22) und Übertragungseinrichtungen (23) umfassen, die fähig sind, zwischen diese Aufnahmeeinrichtung (22) und ihnen zwischengeschaltet zu werden.

3. Vorrichtung nach Anspruch 2, dadurch gekennzeichnet, daß die übertragungseinrichtungen (23) aus einem einfachen Verbindungskabel (24) bestehen.

4. vorrichtung nach Anspruch 2, dadurch gekennzeichnet, daß die Übertragungseinrichtungen (23) eine Bearbeitungseinheit (31) umfassen, mit welcher ein Kontrollmonitor (32) gekoppelt ist.

5. Vorrichtung nach Anspruch 2, dadurch gekennzeichnet, daß die übertragungseinrichtungen (23) einerseits Ausgabeeinrichtungen (33), die durch die Aufnahmeeinrichtung (22) gesteuert zur Ausgabe einer Karte (34) geeignet sind, welche gegebenenfalls in codierter Form die durchgeführte bzw. tatsächliche Aufnahme trägt, und andererseits einen Kartenleser (35) umfassen.

6. Vorrichtung nach einem der Ansprüche 1 bis 5, dadurch gekennzeichnet, daß sie mit einer Konturlesevorrichtung (25) verbunden ist, welche geeignet ist, im Hintergrund die Form des Kreises oder der Einfassung (13) der auszustattenden Brillenfassung (14) aufzunehmen, und daß sie auf ihrem Bildschirm (20) Einrichtungen umfaßt, welche für ein Mischen einer Darstellung (F3) der so gelesenen Form des Kreises oder der Einfassung (13) mit derjenigen (F2) des vom Patienten (15), der mit der Brillenfassung (14) ausgestattet ist, importierten Bildes, geeignet sind.

7. Vorrichtung nach Anspruch 6, dadurch gekennzeichnet, daß sie geeignete Regeleinrichtungen umfaßt, um die Zentrierung der Darstellung (F3) der gelesenen Form des Kreises oder der Einfassung (13) der auszustattenden Brillenfassung (14) zu erlauben.

8. Vorrichtung nach einem der Ansprüche 6 oder 7, dadurch gekennzeichnet, daß sie geeignete Regeleinrichtungen umfaßt, die eine Vergrößerung in der einen oder der anderen der zwei orthogonalen Richtungen der Darstellung (F3) der gelesenen Form des Kreises oder der Einfassung (13) der auszustattenden Brillenfassung (14) erlauben.

9. Vorrichtung nach einem der Ansprüche 6 bis 8, dadurch gekennzeichnet, daß sie geeignete Recheneinrichtungen umfaßt, um einen Vergleich zwischen der Darstellung (F3) der gelesenen Form des Kreises oder der Einfassung (13) der auszustattenden Brillenfassung (14) und der Darstellung (F2) des von dem Patienten (15), der mit der Brillenfassung (14) ausgestattet ist, importierten Bildes abzuleiten, welche Korrekturen es erlauben, eine gegebenenfalls vorhandene Neigung dieser Brillenfassung (14) in Betracht zu ziehen.
